# EUROPÄISCHE PATENTSCHRIFT

(11) **EP 4 425 694 B1**
(45) Veröffentlichungstag und Bekanntmachung des Hinweises auf die Patenterteilung: **11.06.2025**
(21) Anmeldenummer: 23160033.9
(22) Anmeldetag: 03.03.2023
(51) Int. Cl.: H01M 50/618, H01M 50/627, H01M 50/673, H01M 10/42

(54) **BEFÜLLVORRICHTUNG ZUM BEFÜLLEN EINER BATTERIEZELLE MIT EINEM ELEKTROLYT SOWIE VERFAHREN ZUM BETREIBEN EINER BEFÜLLVORRICHTUNG**
FILLING DEVICE FOR FILLING A BATTERY CELL WITH AN ELECTROLYTE AND METHOD OF OPERATING A FILLING DEVICE
DISPOSITIF DE REMPLISSAGE POUR REMPLIR UN ÉLÉMENT DE BATTERIE AVEC UN ÉLECTROLYTE ET PROCÉDÉ DE FONCTIONNEMENT D'UN DISPOSITIF DE REMPLISSAGE

(43) Veröffentlichungstag der Anmeldung: 04.09.2024
(73) Patentinhaber: VAF Gesellschaft für Verkettungsanlagen, Automationseinrichtungen und Fördertechnik mbH, 73441 Bopfingen Baden-Württemberg (DE)
(72) Erfinder: Stumpf, Markus, 91805 Polsingen (DE); Huber, Tobias, 86655 Harburg (DE)
(74) Vertreter: Schorr, Peter Karl

(56) Entgegenhaltungen:
- DE-B1- 1 671 748
- JP-A- 2014 022 336
- US-A- 3 354 917
- US-B2- 8 047 241
- US-B2- 9 065 131

## Beschreibung

Die Erfindung betrifft eine Befüllvorrichtung zum Befüllen einer Batteriezelle mit einem Elektrolyt sowie ein Verfahren zum Betreiben einer Befüllvorrichtung.

Befüllvorrichtungen zum Befüllen von Batteriezellen sind in unterschiedlichen Ausführungsformen aus dem Stand der Technik bekannt. Hierbei werden Batteriegehäuse mit einem Fluid, insbesondere einem Elektrolyt, befüllt.

In den Batteriezellen können jeweils zusätzlich zum Fluid so genannte Jelly-Rolls oder Zellstapel angeordnet werden, in die das Fluid, insbesondere das Elektrolyt, aufsaugbar ist. Hierdurch ist ein sofortiges Befüllen des Batteriegehäuses erschwert, da das Elektrolyt die Jelly-Rolls oder Zellstapel zeitverzögert durchtränkt. Um den aktiven Befüllvorgang durch eine Befüllvorrichtung zeitlich effizient zu halten und um eine zumindest nahezu vollständige Befüllung des Batteriegehäuses mit Fluid zu erzielen, ist es aus dem Stand der Technik bekannt, so genannte Befüllkörper zu verwenden, die trichterartig an den Batteriegehäusen angeordnet sind und in denen das Fluid, das der Batteriezelle zugeführt werden soll, angeordnet wird.

Bei bekannten Befüllvorrichtungen hat es sich als nachteilig herausgestellt, dass beim Befüllen einer Batteriezelle mit Elektrolyt es nie ganz ausgeschlossen werden kann, dass kleine Gasbläschen in den Jelly-Rolls oder Zellstapeln verbleiben, wodurch ein Befüll-Grad der Batteriezelle und ein Leistungsgrad der Batteriezelle reduziert ist.

Eine Aufgabe eines Ausführungsbeispiels der Erfindung ist, eine Befüllvorrichtung zum Befüllen einer Batteriezelle mit einem Elektrolyt sowie ein Verfahren zum Betreiben einer derartigen Befüllvorrichtung vorzuschlagen, bei der, bzw. bei dem ein Befüll-Grad der Batteriezelle steigerbar ist und ein Befüllen einer Batteriezelle zeiteffizienter ausgestaltbar ist. DE 1671748 B1 offenbart ein Beispiel einer Befüllvorrichtung zum Befüllen einer Batteriezelle mit einem Elektrolyt.

Diese Aufgabe wird gelöst durch eine Befüllvorrichtung zum Befüllen einer Batteriezelle mit einem Elektrolyt, mit mindestens einer Verteilereinheit, die mindestens eine Aufnahme, die mindestens einen Flanschabschnitt, mit dem die Verteilereinheit an einer eine Öffnung umfassenden Anlagefläche einer Batteriezelle flächenhaft anliegend anordenbar ist, die mindestens eine von der Aufnahme bis zum Flanschabschnitt erstreckte, durchgehende Aussparung, wobei die Aussparung zumindest im Bereich des Flanschabschnitts zumindest abschnittweise mit der Öffnung der Anlagefläche der Batteriezelle überlappt, und die mindestens einen Fluidkanal umfasst, welcher mit einer Kanalöffnung am Flanschabschnitt zumindest abschnittsweise mit der Öffnung der Anlagefläche der Batteriezelle überlappend mündet, mit mindestens einer Befülleinheit, die in oder an der Aufnahme der Verteilereinheit festlegbar oder festgelegt ist und durch die der Batteriezelle unmittelbar oder über die Aussparung der Verteilereinheit mittelbar ein Elektrolyt zuführbar ist, und mit mindestens einer Druckeinstelleinheit, der mindestens einer des mindestens einen Fluidkanals funktional zugeordnet ist und die mindestens ein mit mindestens einem des mindestens einem Fluidkanals in Fluidverbindung bringbares oder stehendes Druckreduktionsmittel, insbesondere eine Vakuumpumpe, umfasst, durch das ein Unterdruck an der Kanalöffnung des Fluidkanals am Flanschabschnitt erzeugbar ist.

Dadurch, dass die Befüllvorrichtung eine Einstelleinheit umfasst, die zumindest ein Druckreduktionsmittel umfasst, mit dem ein Unterdruck an der Kanalöffnung des Fluidkanals am Flanschabschnitt erzeugbar ist, ist im angeordneten Zustand der Befüllvorrichtung an der Öffnung der Batteriezelle auch innerhalb der Batteriezelle ein Unterdruck erzeugbar. Hierdurch kann beim Befüllen der Batteriezelle mit Elektrolyt durch die Befülleinheit die Gefahr eines Verbleibens von Gasblasen, insbesondere Luftblasen, in der Batteriezelle reduziert werden. Darüber hinaus kann durch das Erzeugen eines Unterdrucks innerhalb der Batteriezelle ein Befüllen der Batteriezelle mit Elektrolyt schneller ausgestaltet werden.

Über die Öffnung der Anlagefläche der Batteriezelle ist ein Hohlraum der Batteriezelle erreichbar. In dem Hohlraum der Batteriezelle können so genannte Jelly-Rolls oder Zellstapel angeordnet sein. Die Jelly-Rolls oder Zellstapel bestehen aus einer Anoden-Lage, aus einer Separator-Lage sowie einer Kathoden-Lage und ggf. einer hierauf noch angeordneten weiteren Separator-Lage, die aufgerollt oder gefaltet sein können und im aufgerollten oder gefalteten Zustand in dem Hohlraum der Batteriezelle anordenbar sind.

Das Druckreduktionsmittel kann grundsätzlich beliebig ausgebildet sein. Bei einer Ausführungsform der Befüllvorrichtung umfasst das Druckreduktionsmittel eine Vakuumpumpe.

Um das Befüllen der Batteriezelle weiter zu verbessern, erweist es sich als vorteilhaft, wenn die Druckeinstelleinheit mindestens ein mit mindestens einem des mindestens einem Fluidkanals in Fluidverbindung bringbares Druckaufbaumittel, insbesondere einen Druckregler, umfasst, durch das ein Überdruck an der Kanalöffnung des Fluidkanals am Flanschabschnitt erzeugbar ist.

Wenn die Druckeinstelleinheit mindestens ein Druckaufbaumittel umfasst, mit dem ein Überdruck an der Kanalöffnung des Fluidkanals am Flanschabschnitt erzeugbar ist, kann durch die Fluidverbindung über die Öffnung mit dem Hohlraum der Batteriezelle in einer angeordneten Anordnung der Befüllvorrichtung an der Batteriezelle im Hohlraum der Batteriezelle ein Überdruck erzeugt werden. Dies erweist sich insbesondere dann als vorteilhaft, wenn durch die Befülleinheit ein Elektrolyt der Batteriezelle zugeführt wurde. Durch den anliegenden Überdruck kann ein Durchtränken beispielsweise eines in der Batteriezelle angeordneten Jelly-Rolls oder eines Zellstapels mit Elektrolyt verbessert werden und eine einzuplanende Durchtränk-Zeit reduziert sein.

Darüber hinaus erweist es sich als vorteilhaft, wenn die Druckeinstelleinheit mindestens ein Fluidzuführmittel umfasst, durch das der Kanalöffnung des Fluidkanals am Flanschabschnitt ein Fluid, insbesondere ein Inertgas, wie Argon oder Stickstoff, oder ein Reinigungsmittel zuführbar ist.

Dadurch, dass die Druckstelleinheit mindestens ein Fluidzuführmittel umfasst, durch das der Kanalöffnung ein Fluid zuführbar ist, gelangt dieses Fluid über die Öffnung bei einer an der Batteriezelle angeordneten Anordnung der Befüllvorrichtung in den Innenraum der Batteriezelle. Hierdurch ist ein Spülen der Batteriezelle mit einem als Reinigungsmittel ausgebildeten Fluid ermöglicht. Darüber hinaus kann das Fluid auch ein Inertgas, wie Argon oder Stickstoff, umfassen, wodurch beim Beaufschlagen des Fluids mit einem Überdruck, der durch das Druckaufbaumittel aufgebaut wird, ein Durchtränken der Jelly-Rolls oder der Zellstapel - ein so genanntes Soaking oder Wetting - verbessert ist.

Fluidzuführmittel und Druckaufbaumittel können funktional zusammenarbeiten oder ein gemeinsames Bauteil bilden.

Um einen Befüllgrad der Batteriezelle zu optimieren, erweist es sich als vorteilhaft, wenn der durch das Druckreduktionsmittel erzeugte Unterdruck kleiner als 1 bar, insbesondere kleiner als 500 mbar, insbesondere kleiner als 200 mbar, insbesondere kleiner als 20 mbar, einstellbar ist und/oder wenn der durch das Druckaufbaumittel erzeugte Überdruck größer als 1 bar, insbesondere größer als 3 bar, insbesondere größer als 5 bar, insbesondere auf maximal 6 bar, einstellbar ist.

Grundsätzlich ist es denkbar, dass der durch das Druckreduktionsmittel erzeugte Unterdruck sich in einem Bereich zwischen 5 bis 20 mbar oder in einem Bereich von 150 bis 200 mbar befindet. Beispielsweise ist es denkbar, dass durch das Druckreduktionsmittel zunächst ein Unterdruck zwischen 5 und 20 mbar erzeugt wird, um zumindest nahezu ein Vakuum innerhalb der Batteriezelle zu erzeugen. Hierdurch sind die Anteile von verbleibenden Luftmolekülen oder Gasmolekülen innerhalb der Batteriezelle reduziert. Zum Befüllen kann dann auf ein Druckniveau von 150 bis 200 mbar erhöht werden.

Wenn durch das Druckaufbaumittel ein Druck von maximal 6 bar erzeugt wird, kann ein Durchtränken von in der Batteriezelle angeordneten Jelly-Rolls oder Zellstapel verbessert werden.

Darüber hinaus sind Ausführungsformen der Befüllvorrichtung denkbar, bei denen das Druckaufbaumittel, das Fluidzuführmittel und das Druckreduktionsmittel mit demselben Fluidkanal in Fluidverbindung bringbar sind oder bei denen das Druckaufbaumittel mit einem Druckaufbau-Fluidkanal, das Fluidzuführmittel mit einem Fluidzuführ-Kanal und das Druckreduktionsmittel mit einem Druckreduktions-Fluidkanal in Fluidverbindung bringbar sind.

Wenn Druckaufbaumittel, Fluidzuführmittel und Druckreduktionsmittel mit demselben Fluidkanal in Verbindung bringbar sind, kann die Befüllvorrichtung einfach ausgebildet sein. Wenn das Druckaufbaumittel mit einem Druckaufbau-Fluidkanal, das Fluidzuführmittel mit einem Fluidzuführ-Kanal und das Druckreduktionsmittel mit einem Druckreduktions-Fluidkanal in Fluidverbindung bringbar sind, sind die einzelnen Komponenten der Einstelleinheit voneinander separiert.

Darüber hinaus sind Ausführungsformen denkbar, insbesondere wenn Fluidzuführmittel und Druckaufbaumittel ein gemeinsames Bauteil bilden, bei denen Druckaufbau-Fluidkanal und Fluidzuführ-Kanal einen gemeinsamen Kanal umfassen.

Bei einer Weiterbildung letztgenannter Ausführungsform erweist es sich als vorteilhaft, wenn das Druckaufbaumittel, das Fluidzuführmittel und das Druckreduktionsmittel mit demselben Fluidkanal in Fluidverbindung bringbar sind oder wenn das Druckaufbaumittel mit einem Druckaufbau-Fluidkanal, das Fluidzuführmittel mit einem Fluidzuführ-Kanal und das Druckreduktionsmittel mit einem Druckreduktions-Fluidkanal in Fluidverbindung bringbar sind.

Solchenfalls ist es denkbar, dass die einzelnen Fluidkanäle in einen gemeinsamen Kanal münden, der die Kanalöffnung umfasst.

Um zu verhindern, dass Fluid entlang einer unbeabsichtigten Strömungsrichtung fließt, sind Ausführungsformen der Befüllvorrichtung vorgesehen, bei denen die Druckeinstelleinheit mindestens ein Druckaufbauventil umfasst, das zwischen dem Druckaufbaumittel und der Verteilereinheit am Fluidkanal angeordnet ist, insbesondere an der Verteilereinheit festgelegt ist, bei denen die Druckeinstelleinheit mindestens ein Fluidzuführventil umfasst, das zwischen dem Fluidzuführmittel und der Verteilereinheit am Fluidkanal angeordnet ist, insbesondere an der Verteilereinheit festgelegt ist, und/oder bei denen die Druckeinstelleinheit mindestens ein Druckreduktionsventil umfasst, das zwischen dem Druckreduktionsmittel und der Verteilereinheit am Fluidkanal angeordnet ist, insbesondere an der Verteilereinheit festgelegt ist.

Solchenfalls ist ein Rückfluss zu dem jeweiligen Mittel auf einfache Weise verhindert.

Die Verteilereinheit kann grundsätzlich beliebig ausgebildet sein. Es erweist sich als vorteilhaft, wenn die Verteilereinheit einen Verteilerkörper umfasst, der mit dem Flanschabschnitt ein gemeinsames einstückiges Bauteil bildet oder wenn die Verteilereinheit einen eine Flanschaufnahme umfassenden Verteilerkörper und einen den Flanschabschnitt bildenden Flanschkörper umfasst, wobei der Flanschkörper an der Flanschaufnahme des Verteilerkörpers festlegbar oder festgelegt ist.

Wenn die Verteilereinheit einen Verteilerkörper umfasst, der mit dem Flanschabschnitt ein gemeinsames, einstückiges Bauteil bildet, ist die Verteilereinheit bauteilreduziert ausbildbar.

Wenn die Verteilereinheit eine Flanschaufnahme umfassenden Verteilerkörper und einen den Flanschabschnitt bildenden Flanschkörper umfasst, wobei der Flanschkörper an der Flanschaufnahme des Verteilerkörpers festlegbar oder festgelegt ist, kann ein und derselbe Verteilerkörper mit unterschiedlichen Flanschkörpern für unterschiedliche Öffnungen von Batteriezellen verwendet werden.

Die Aussparung im Verteilerkörper erstreckt sich bei einer mehrteiligen Ausbildung der Verteilereinheit, insbesondere in Verteilerkörper und Flanschkörper, durch Verteilerkörper und Flanschkörper.

Es erweist sich als vorteilhaft, wenn der mindestens eine Fluidkanal und die Aussparung zumindest abschnittsweise einen gemeinsamen Abschnitt umfassen.

Wenn der mindestens eine Fluidkanal den Druckaufbau-Fluidkanal, den Fluidzuführ-Kanal und/oder den Druckreduktions-Fluidkanal können diese gemeinsam in der Aussparung münden, insbesondere kann die Aussparung den gemeinsamen Abschnitt, der in die Kanalöffnung am Flanschabschnitt mündet, bilden. Solchenfalls sind Kanalöffnung und Aussparung gemeinsam ausgebildet.

Der mindestens eine Fluidkanal kann grundsätzlich beliebig hergestellt werden. Er lässt sich einfach und kostengünstig herstellen, wenn der mindestens eine Fluidkanal eine quer oder schräg zur Aussparung der Verteilereinheit erstrecke Bohrung umfasst.

Solchenfalls mündet der mindestens eine Fluidkanal in der Aussparung der Verteilereinheit, wobei die Aussparung beim Einmünden des jeweiligen Fluidkanals den Fluidkanal in Richtung Kanalöffnung fortsetzt.

Grundsätzlich ist es denkbar, dass die Befülleinheit das Elektrolyt unmittelbar durch die Aussparung der Verteilereinheit in Richtung Batteriezelle fließen lässt. Bei einer Weiterbildung der Befüllvorrichtung ist vorgesehen, dass die Befülleinheit ein Dosierventil umfasst, das in der Aufnahme der Verteilereinheit angeordnet ist und/oder dass die Befülleinheit eine Dosiernadel umfasst, die am Dosierventil angeordnet ist, die vom Dosierventil bis zur Öffnung der Anlagefläche der Batteriezelle erstreckt und durch die der Batteriezelle Elektrolyt zuführbar ist.

Die Dosiernadel kann zumindest abschnittsweise in die Batteriezelle eintauchen und solchenfalls über die Öffnung in die Anlagefläche der Batteriezelle hinaus erstreckt in Richtung Batteriezelle ausgebildet sein.

Solchenfalls fließt kein Elektrolyt unmittelbar an einer Wandung der Aussparung entlang, sondern ausschließlich über die Dosiernadel.

Hierdurch ist die Gefahr reduziert, dass Elektrolyt beispielsweise durch den mindestens einen Fluidkanal beispielsweise in Richtung Druckreduktionsmittel fließt.

Das Befüllen einer Batteriezelle lässt sich weiter vereinfachen, wenn die Befülleinheit mindestens einen trichterartigen Befüllkörper umfasst, in dem Elektrolyt anordenbar ist und durch den Elektrolyt durch das Dosierventil und/oder durch die Dosiernadel in Richtung Batteriezelle transportierbar ist.

In dem trichterartigen Befüllkörper kann beispielsweise Elektrolyt angeordnet werden. Der trichterartige Befüllkörper kann beispielsweise eine Füllstandsanzeige umfassen, bis zu der der Befüllkörper mit Elektrolyt aufgefüllt werden kann und dann über das Dosierventil über die Dosiernadel in Richtung Batteriezelle transportiert werden.

Hierdurch ist die Befüllvorrichtung auf einfache Weise mit Elektrolyt ausstattbar, ohne dass der Befüllvorrichtung permanent Elektrolyt zugeführt werden müsste.

Um insbesondere innerhalb der Batteriezellen den Unterdruck, bzw. den Überdruck zu erzeugen, umfasst die Befüllvorrichtung mindestens ein Flanschdichtmittel, das auf einer der Anlagefläche der Batteriezelle zugewandten Seite des Flanschabschnitts, insbesondere des Flanschkörpers; am Flanschabschnitt, insbesondere am Flanschkörper, angeordnet ist, durch mindestens ein Verteilereinheitdichtmittel, das auf einer dem Flanschkörper zugewandten Seite des Verteilerkörpers zwischen Verteilerkörper und dem Flanschkörper angeordnet ist und/oder durch mindestens ein Dosierventildichtmittel, das auf einer dem Dosierventil zugewandten Seite der Verteilereinheit zwischen Verteilereinheit und Dosierventil angeordnet ist.

Darüber hinaus wird die Aufgabe gelöst durch ein Verfahren zum Betreiben einer Befüllvorrichtung mit mindestens einem der zuvor genannten Merkmale mit den Schritten:
a. Anordnen der Befüllvorrichtung an einer Batteriezelle, wobei die Aussparung der Befüllvorrichtung zumindest im Bereich des Flanschabschnitts zumindest abschnittweise mit einer Öffnung einer Anlagefläche der Batteriezelle überlappt;
b. Erzeugen eines Unterdrucks an der Kanalöffnung des Fluidkanals am Flanschabschnitt durch das Druckreduktionsmittel der Druckeinstelleinheit bis Erreichen eines bestimmten Befüll-Drucks;
c. Befüllen der Batteriezelle mit Elektrolyt durch die Befülleinheit;
d. Erzeugen eines Überdrucks an der Kanalöffnung des Fluidkanals am Flanschabschnitt durch das Druckaufbaumittel der Druckeinstelleinheit bis Erreichen eines bestimmten Wetting-Drucks durch Einfüllen eines Inertgases.

Schließlich erweist es sich als vorteilhaft, wenn das Erzeugen eines Unterdrucks an der Kanalöffnung des Fluidkanals am Flanschabschnitt durch das Druckreduktionsmittel der Druckeinstelleinheit bis Erreichen eines bestimmten Befüll-Drucks zunächst ein Absenken des Drucks auf 5 bis 20 mbar und vor dem Befüllen der Batteriezelle mit Elektrolyt durch die Befülleinheit ein Erhöhen auf maximal 500 mbar, insbesondere maximal 350 mbar, insbesondere maximal 200 mbar, erfolgt und/oder wenn der bestimmte Wetting Druck maximal 6 bar, insbesondere maximal 5 bar, insbesondere maximal 4 bar, umfasst.

Wenn das Erzeugen eines Unterdrucks an der Kanalöffnung des Fluidkanals am Flanschabschnitt durch das Druckreduktionsmittel der Druck-Einstelleinheit bis zum Erreichen eines bestimmten Befüll-Drucks zunächst ein Absenken des Drucks auf 5 bis 20 mbar umfasst, kann ein Hohlraum der Batteriezelle zumindest nahezu evakuiert werden und eine Art Vakuum hergestellt werden. Hierdurch ist die Gefahr reduziert, dass Gasmoleküle, insbesondere Luftmoleküle, beim Befüllen der Batteriezelle mit Elektrolyt verbleiben.

Dadurch, dass hiernach ein Erhöhen auf maximal 500 mbar erfolgt, kann ein Befüllen der Batteriezelle erleichtert durchgeführt werden.

Weitere Merkmale, Einzelheiten und Vorteile der Erfindung ergeben sich aus den beigefügten Patentansprüchen, aus der zeichnerischen Darstellung und nachfolgenden Beschreibung zweier bevorzugter Ausführungsformen der Befüllvorrichtung und einer Ausführungsform des Verfahrens.

**In** der Zeichnung zeigt:
- Figur 1: Eine schematische Darstellung eines ersten Ausführungsbeispiels der Befüllvorrichtung;
- Figur 2: Eine schematische Darstellung eines zweiten Ausführungsbeispiels der Befüllvorrichtung;
- Figur 3: Ein schematisches Ablaufdiagramm eines Ausführungsbeispiels des erfindungsgemäßen Verfahrens.

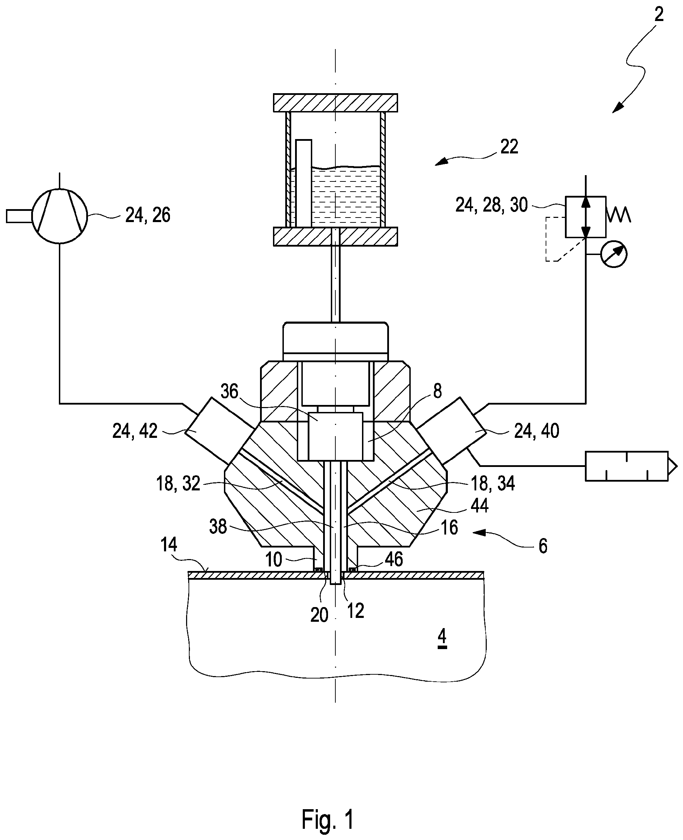

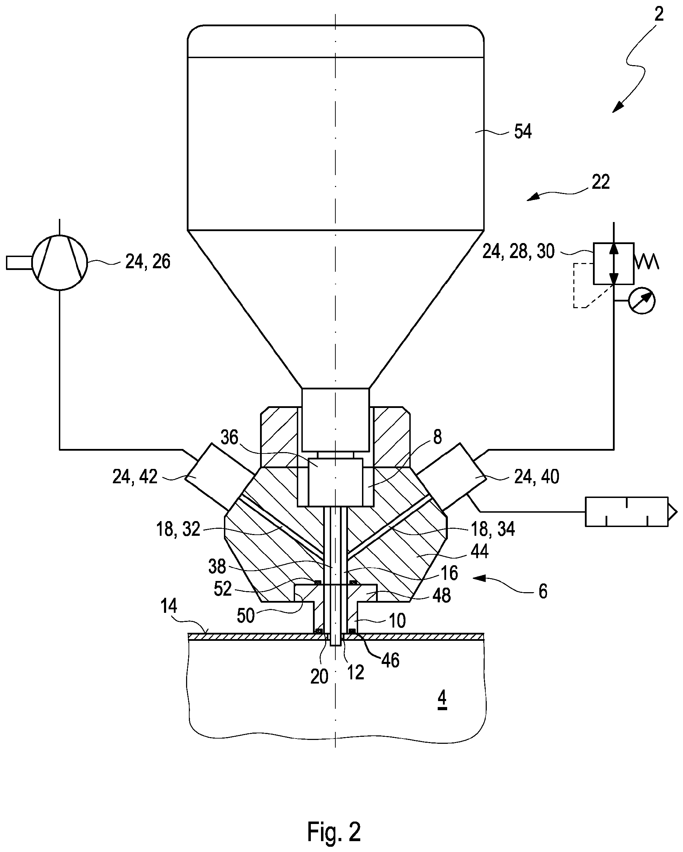

Die Figuren 1 und 2 zeigen jeweils Ausführungsbeispiele einer insgesamt mit dem Bezugszeichen 2 versehenen Befüllvorrichtung zum Befüllen einer Batteriezelle 4 mit einem Elektrolyt. Die Befüllvorrichtung 2 der beiden Ausführungsbeispiele umfasst jeweils eine Verteilereinheit 6, die mindestens eine Aufnahme 8, einen Flanschabschnitt 10, mit dem die Verteilereinheit 6 an einer eine Öffnung 12 umfassenden Anlagefläche 14 der Batteriezelle 4 flächenhaft anliegend angeordnet ist und mindestens eine von der Aufnahme 8 bis zum Flanschabschnitt 10 erstreckte durchgehende Aussparung 16. Die Aussparung 16 überlappt zumindest im Bereich des Flanschabschnitts 10 zumindest abschnittsweise mit der Öffnung 12 der Anlagefläche 14 der Batteriezelle 4.

Darüber hinaus umfasst die Verteilereinheit 6 Fluidkanäle 18, die mit einer Kanalöffnung 20 am Flanschabschnitt 10 zumindest abschnittsweise mit der Öffnung 12 der Anlagefläche 14 der Batteriezelle 4 überlappend mündet.

Darüber hinaus umfasst die Befüllvorrichtung 2 eine Befülleinheit 22, die in oder an der Aufnahme 8 der Verteilereinheit 6 festgelegt ist und durch die der Batteriezelle 4 Elektrolyt zuführbar ist.

Darüber hinaus umfasst die Befüllvorrichtung 2 einen Druck-Einstelleinheit 24, der mindestens einer des mindestens einen Fluidkanals 18 funktional zugeordnet ist und die mindestens ein mit mindestens einem des mindestens einen Fluidkanals 18 in Fluidverbindung stehenden Druckreduktionsmittels 26 umfasst. Durch das Druckreduktionsmittel 26 ist ein Unterdruck an der Kanalöffnung 20 des Fluidkanals 18 am Flanschabschnitt 10 erzeugbar.

Bei dem in den Figuren gezeigten Ausführungsbeispielen umfasst die Druckeinstelleinheit 24 zusätzlich ein Druckaufbaumittel 28, durch das ein Überdruck an der Kanalöffnung 20 des Fluidkanals 18 am Flanschabschnitt 10 erzeugbar ist. Darüber hinaus ist bei den in den Figuren gezeigten Ausführungsbeispielen das Druckaufbaumittel 28 derart ausgestaltet, dass es auch ein Fluidzuführmittel 30 umfasst. Hierdurch ist Fluid der Kanalöffnung 20 des Fluidkanals 18 am Flanschabschnitt 10 zuführbar.

Bei den in den Figuren gezeigten Ausführungsbeispielen ist der Fluidkanal 18, der dem Druckreduktionsmittel 26 zugeordnet ist als Druckreduktions-Fluidkanal 32 ausgebildet. Entsprechend ist der Fluidkanal 18, der dem Druckaufbaumittel 28 zugeordnet ist, als Druckaufbau-Fluidkanal 34 ausgebildet.

Die Befülleinheit 22 umfasst bei den in den Figuren gezeigten Ausführungsbeispielen ein Dosierventil 36, mit dem die Befülleinheit 22 in der Aufnahme 8 der Verteilereinheit 6 festgelegt ist. An dem Dosierventil 36 ist eine Dosiernadel 38 angeordnet, die sich vom Dosierventil 36 in Richtung Öffnung 12 der Batteriezelle 4 erstreckt und in die Batteriezelle 4 zumindest abschnittsweise eingreift. Hierbei ist die Dosiernadel 38 durch die Aussparung 16 der Verteilereinheit 6 hindurch erstreckt. Um einen Rückfluss durch die Fluidkanäle 18 in Richtung Druckreduktionsmittel 26, bzw. in Richtung Druckaufbaumittel 28 zu verhindern, umfasst die Druckeinstelleinheit 24 ein Druckaufbauventil 40, das zwischen dem Druckaufbaumittel 28 und der Verteilereinheit 6 an der Verteilereinheit 6 angeordnet ist sowie ein Druckreduktionsventil 42, das zwischen Druckreduktionsmittel 26 und der Verteilereinheit 6 an der Verteilereinheit 6 festgelegt ist.

Figur 1 zeigt ein erstes Ausführungsbeispiel der Befüllvorrichtung 2, bei der das Dosierventil 36 mit einer Fluidzuführung verbunden ist. Über das Dosierventil 36 und die Dosiernadel 38 wird hierbei kontinuierlich Elektrolyt in Richtung Batteriezelle 4 abgegeben.

Bei dem in Figur 1 ersichtlichen Ausführungsbeispiel umfasst die Verteilereinheit 6 einen Verteilerkörper 44, der mit dem Flanschabschnitt 10 ein gemeinsames einstückiges Bauteil bildet.

Darüber hinaus umfasst das Ausführungsbeispiel gemäß Figur 1 ein Flanschdichtmittel 46, das auf einer der Anlagefläche 14 der Batteriezelle 4 zugewandten Seite des Flanschabschnitts 10 angeordnet ist.

Auch beim Ausführungsbeispiel gemäß Figur 2 ist ein derartiges Flanschdichtmittel 46 auf der der Anlagefläche 14 der Batteriezelle 4 zugewandten Seite angeordnet.

Im Unterschied zum Ausführungsbeispiel gemäß Figur 1 ist beim Ausführungsbeispiel gemäß Figur 2 die Verteilereinheit 6 durch einen Verteilerkörper 44 und einen Flanschkörper 48 gebildet. Der Flanschkörper 48 umfasst den Flanschabschnitt 10 und ist in einer Flanschaufnahme 50 des Verteilerkörpers 44 festgelegt. Zwischen Flanschkörper 48 und Verteilerkörper 44 ist ein Verteilereinheit-Dichtmittel 52 angeordnet.

Beim Ausführungsbeispiel gemäß Figur 2 umfasst die Verteilereinheit 6 zusätzlich einen trichterartigen Befüllkörper 54, in dem Elektrolyt angeordnet ist und durch den über das Dosierventil 36 und die Dosiernadel 38 Elektrolyt in Richtung Batteriezelle 4 transportierbar ist.

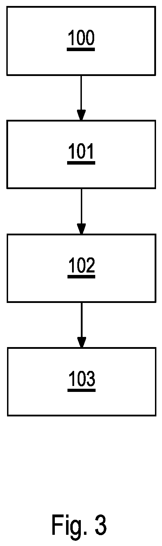

Figur 3 zeigt ein schematisches Ablaufdiagramm einer Ausführungsform eines erfindungsgemäßen Verfahrens. Unter Zuhilfenahme der Darstellung der Befüllvorrichtung 2 in den Figuren 1 und 2, wird das Verfahren nachfolgend beschrieben:
In einem ersten Schritt 100 wird die Befüllvorrichtung 2 an einer Batteriezelle 4 angeordnet, wobei die Aussparung 16 der Befüllvorrichtung 2 zumindest im Bereich des Flanschabschnitts 10 zumindest abschnittsweise mit einer Öffnung 12 einer Anlagefläche 14 der Batteriezelle 4 überlappt. Hierdurch stehen Aussparung 16 und Öffnung 12 in Fluidverbindung.

In einem anschließenden Schritt 101 wird durch das Druckreduktionsmittel 26 an der Kanalöffnung 20 des Fluidkanals 18 am Flanschabschnitt 10 ein Unterdruck erzeugt, bis ein bestimmter Befüll-Druck erreicht wird. Hierbei kann zuvor durch das Druckreduktionsmittel 26 der Druck zunächst auf 5 bis 20 mbar reduziert werden und anschließend auf den Befüll-Druck, insbesondere auf maximal 500 mbar erhöht werden.

Hierdurch wird zunächst der Innenraum der Batteriezelle 4 evakuiert und anschließend durch Herstellen des bestimmten Befüll-Drucks ein Befüllen der Batteriezelle 4 durch die Befülleinheit 22 ermöglicht.

In einem anschließenden Schritt 102 wird die Batteriezelle 4 durch die Befülleinheit 22 mit Elektrolyt befüllt.

In einem anschließenden Schritt 103 wird durch das Druckaufbaumittel 28 ein Überdruck erzeugt, bis ein bestimmter Wetting-Druck erzielt wird. Hierbei kann auf ein so genanntes Inertgas zurückgegriffen werden. Der bestimmte Wetting-Druck kann maximal 6 bar umfassen.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Befüllvorrichtung
- 4: Batteriezelle
- 6: Verteilereinheit
- 8: Aufnahme
- 10: Flanschabschnitt
- 12: Öffnung
- 14: Anlagefläche
- 16: Aussparung
- 18: Fluidkanal
- 20: Kanalöffnung
- 22: Befülleinheit
- 24: Druckeinstelleinheit
- 26: Druckreduktionsmittel
- 28: Druckaufbaumittel
- 30: Fluidzuführmittel
- 32: Druckreduktions-Fluidkanal
- 34: Druckaufbau-Fluidkanal
- 36: Dosierventil
- 38: Dosiernadel
- 40: Druckaufbauventil
- 42: Druckreduktionsventil
- 44: Verteilerkörper
- 46: Flanschdichtmittel
- 48: Flanschkörper
- 50: Flanschaufnahme
- 52: Verteilereinheit-Dichtmittel
- 54: Befüllkörper
- 100-103: Verfahrensschritte

## Patentansprüche

1. Befüllvorrichtung (2) zum Befüllen einer Batteriezelle (4) mit einem Elektrolyt, mit mindestens einer Verteilereinheit (6), die mindestens eine Aufnahme (8), die mindestens einen Flanschabschnitt (10), mit dem die Verteilereinheit (6) an einer eine Öffnung (12) umfassenden Anlagefläche (14) einer Batteriezelle (4) flächenhaft anliegend anordenbar ist, die mindestens eine von der Aufnahme (8) bis zum Flanschabschnitt (10) erstreckte, durchgehende Aussparung (16), wobei die Aussparung (16) zumindest im Bereich des Flanschabschnitts (10) zumindest abschnittweise mit der Öffnung (12) der Anlagefläche (14) der Batteriezelle (4) überlappt, und die mindestens einen Fluidkanal (18) umfasst, welcher mit einer Kanalöffnung (20) am Flanschabschnitt (10) zumindest abschnittsweise mit der Öffnung (12) der Anlagefläche (14) der Batteriezelle (4) überlappend mündet, mit mindestens einer Befülleinheit (22), die in oder an der Aufnahme (8) der Verteilereinheit (6) festlegbar oder festgelegt ist und durch die der Batteriezelle (4) unmittelbar oder über die Aussparung (16) der Verteilereinheit (6) mittelbar ein Elektrolyt zuführbar ist, und mit mindestens einer Druckeinstelleinheit (24), der mindestens einer des mindestens einen Fluidkanals (18) funktional zugeordnet ist und die mindestens ein mit mindestens einem des mindestens einem Fluidkanals (18) in Fluidverbindung bringbares oder stehendes Druckreduktionsmittel (26), insbesondere eine Vakuumpumpe, umfasst, durch das ein Unterdruck an der Kanalöffnung (20) des Fluidkanals (18) am Flanschabschnitt (10) erzeugbar ist.

2. Befüllvorrichtung (2) nach Anspruch 1, **dadurch gekennzeichnet, dass** die Druckeinstelleinheit (24) mindestens ein mit mindestens einem des mindestens einem Fluidkanals (18) in Fluidverbindung bringbares Druckaufbaumittel (28), insbesondere einen Druckregler, umfasst, durch das ein Überdruck an der Kanalöffnung (20) des Fluidkanals (18) am Flanschabschnitt (10) erzeugbar ist.

3. Befüllvorrichtung (2) nach Anspruch 1 oder 2, **dadurch gekennzeichnet, dass** die Druckeinstelleinheit (24) mindestens ein Fluidzuführmittel 30) umfasst, durch das der Kanalöffnung (20) des Fluidkanals (18) am Flanschabschnitt (10) ein Fluid, insbesondere ein Inertgas, wie Argon oder Stickstoff, oder ein Reinigungsmittel zuführbar ist.

4. Befüllvorrichtung (2) nach einem der vorhergehenden Ansprüche, **dadurch gekennzeichnet, dass** der durch das Druckreduktionsmittel (26) erzeugte Unterdruck kleiner als 1 bar, insbesondere kleiner als 500 mbar, insbesondere kleiner als 200 mbar, insbesondere kleiner als 20 mbar, einstellbar ist und/oder dass der durch das Druckaufbaumittel (28) erzeugte Überdruck größer als 1 bar, insbesondere größer als 3 bar, insbesondere größer als 5 bar, insbesondere auf maximal 6 bar, einstellbar ist.

5. Befüllvorrichtung (2) nach einem der vorhergehenden Ansprüche, **dadurch gekennzeichnet, dass** das Druckaufbaumittel (28), das Fluidzuführmittel (30) und das Druckreduktionsmittel (26) mit demselben Fluidkanal (18) in Fluidverbindung bringbar sind oder dass das Druckaufbaumittel (28) mit einem Druckaufbau-Fluidkanal (34), das Fluidzuführmittel (30) mit einem Fluidzuführ-Kanal und das Druckreduktionsmittel (26) mit einem Druckreduktions-Fluidkanal (32) in Fluidverbindung bringbar sind.

6. Befüllvorrichtung (2) nach Anspruch 5, **dadurch gekennzeichnet, dass** der Druckaufbau-Fluidkanal (34), Fluidzuführ-Kanal und Druckreduktions-Fluidkanal (32) zumindest auf der der Kanalöffnung (20) am Flanschabschnitt (10) entgegengesetzter Seite voneinander separiert und zueinander beabstandet sind und/oder dass der Druckaufbau-Fluidkanal (34), Fluidzuführ-Kanal und Druckreduktions-Fluidkanal (32) gemeinsam in die Kanalöffnung (20) am Flanschabschnitt (10) münden.

7. Befüllvorrichtung (2) nach einem der vorhergehenden Ansprüche, **dadurch gekennzeichnet, dass** die Druckeinstelleinheit (24) mindestens ein Druckaufbauventil (40) umfasst, das zwischen dem Druckaufbaumittel (28) und der Verteilereinheit (6) am Fluidkanal (18) angeordnet ist, insbesondere an der Verteilereinheit (6) festgelegt ist, dass die Druckeinstelleinheit (24) mindestens ein Fluidzuführventil umfasst, das zwischen dem Fluidzuführmittel (30) und der Verteilereinheit (6) am Fluidkanal (18) angeordnet ist, insbesondere an der Verteilereinheit (6) festgelegt ist, und/oder dass die Druckeinstelleinheit (24) mindestens ein Druckreduktionsventil (42) umfasst, das zwischen dem Druckreduktionsmittel (26) und der Verteilereinheit (6) am Fluidkanal (18) angeordnet ist, insbesondere an der Verteilereinheit (6) festgelegt ist.

8. Befüllvorrichtung (2) nach einem der vorhergehenden Ansprüche, **dadurch gekennzeichnet, dass** die Verteilereinheit (6) einen Verteilerkörper (44) umfasst, der mit dem Flanschabschnitt (10) ein gemeinsames einstückiges Bauteil bildet oder dass die Verteilereinheit (6) einen eine Flanschaufnahme (50) umfassenden Verteilerkörper (44) und einen den Flanschabschnitt (10) bildenden Flanschkörper (48) umfasst, wobei der Flanschkörper (48) an der Flanschaufnahme (50) des Verteilerkörpers (44) festlegbar oder festgelegt ist.

9. Befüllvorrichtung (2) nach einem der vorhergehenden Ansprüche, **dadurch gekennzeichnet, dass** der mindestens eine Fluidkanal (18) und die Aussparung (16) zumindest abschnittsweise einen gemeinsamen Abschnitt umfassen.

10. Befüllvorrichtung (2) nach einem der vorhergehenden Ansprüche, **dadurch gekennzeichnet, dass** der mindestens eine Fluidkanal (18) eine quer oder schräg zur Aussparung (16) der Verteilereinheit (6) erstrecke Bohrung umfasst.

11. Befüllvorrichtung (2) nach einem der vorhergehenden Ansprüche, **dadurch gekennzeichnet, dass** die Befülleinheit (22) ein Dosierventil (36) umfasst, das in der Aufnahme (8) der Verteilereinheit (6) angeordnet ist und/oder dass die Befülleinheit (22) eine Dosiernadel (38) umfasst, die am Dosierventil (36) angeordnet ist, die vom Dosierventil (36) bis zur Öffnung (12) der Anlagefläche (14) der Batteriezelle (4) erstreckt und durch die der Batteriezelle (4) Elektrolyt zuführbar ist.

12. Befüllvorrichtung (2) nach einem der vorhergehenden Ansprüche, **dadurch gekennzeichnet, dass** die Befülleinheit (22) mindestens einen trichterartigen Befüllkörper (54) umfasst, in dem Elektrolyt anordenbar ist und durch den Elektrolyt durch das Dosierventil (36) und/oder durch die Dosiernadel (38) in Richtung Batteriezelle (4) transportierbar ist.

13. Befüllvorrichtung (2) nach einem der vorhergehenden Ansprüche, **gekennzeichnet durch** mindestens ein Flanschdichtmittel (46), das auf einer der Anlagefläche (14) der Batteriezelle (4) zugewandten Seite des Flanschabschnitts (10), insbesondere des Flanschkörpers (48); am Flanschabschnitt (10), insbesondere am Flanschkörper (48), angeordnet ist, durch mindestens ein Verteilereinheitsdichtmittel (52), das auf einer dem Flanschkörper (48) zugewandten Seite des Verteilerkörpers (44) zwischen Verteilerkörper (44) und dem Flanschkörper (48) angeordnet ist und/oder durch mindestens ein Dosierventildichtmittel, das auf einer dem Dosierventil (36) zugewandten Seite der Verteilereinheit (6) zwischen Verteilereinheit (6) und Dosierventil (36) angeordnet ist.

14. Verfahren zum Betreiben einer Befüllvorrichtung (2) nach einem der Ansprüche 1 bis 13, mit den Schritten:
a. Anordnen der Befüllvorrichtung (2) an einer Batteriezelle (4), wobei die Aussparung (16) der Befüllvorrichtung (2) zumindest im Bereich des Flanschabschnitts (10) zumindest abschnittweise mit einer Öffnung (12) einer Anlagefläche (14) der Batteriezelle (4) überlappt;
b. Erzeugen eines Unterdrucks an der Kanalöffnung (20) des Fluidkanals (18) am Flanschabschnitt (10) durch das Druckreduktionsmittel (26) der Druckeinstelleinheit (24) bis Erreichen eines bestimmten Befüll-Drucks;
c. Befüllen der Batteriezelle (4) mit Elektrolyt durch die Befülleinheit (22);
d. Erzeugen eines Überdrucks an der Kanalöffnung (20) des Fluidkanals (18) am Flanschabschnitt (10) durch das Druckaufbaumittel (28) der Druckeinstelleinheit (24) bis Erreichen eines bestimmten Wetting-Drucks durch Einfüllen eines Inertgases.

15. Verfahren nach Anspruch 14, **dadurch gekennzeichnet, dass** das Erzeugen eines Unterdrucks an der Kanalöffnung (20) des Fluidkanals (18) am Flanschabschnitt (10) durch das Druckreduktionsmittel (26) der Druckeinstelleinheit (24) bis Erreichen eines bestimmten Befüll-Drucks zunächst ein Absenken des Drucks auf 5 bis 20 mbar und vor dem Befüllen der Batteriezelle (4) mit Elektrolyt durch die Befülleinheit (22) ein Erhöhen auf maximal 500 mbar, insbesondere maximal 350 mbar, insbesondere maximal 200 mbar, erfolgt und/oder dass der bestimmte Wetting Druck maximal 6 bar, insbesondere maximal 5 bar, insbesondere maximal 4 bar, umfasst.

## Claims

1. Filling device (2) for filling a battery cell (4) with an electrolyte, with at least one distributor unit (6), with at least one receptacle (8), which has at least one flange section (10), with which the distributor unit (6) can be arranged so as to lie flat against a contact surface (14) of a battery cell (4) comprising an opening (12), with at least one continuous cut-out (16) extending from the receptacle (8) to the flange section (10), wherein the cut-out (16) overlaps at least in the region of the flange section (10) at least in sections with the opening (12) of the contact surface (14) of the battery cell (4), and which comprises at least one fluid channel (18), which opens with a channel opening (20) on the flange section (10) at least overlapping in sections with the opening (12) of the contact surface (14) of the battery cell (4), with at least one filling unit (22) which can be fixed or secured in or on the receptacle (8) of the distributor unit (6) and through which an electrolyte can be supplied to the battery cell (4) directly, or indirectly via the cut-out (16) of the distributor unit (6), and with at least one pressure adjustment unit (24), to which at least one of the at least one fluid channel (18) is functionally assigned and which comprises at least one pressure reduction means (26), in particular a vacuum pump, which can be brought into fluid connection with at least one of the at least one fluid channel (18) and by means of which a negative pressure can be generated at the channel opening (20) of the fluid channel (18) on the flange section (10).

2. Filling device (2) according to claim 1, **characterised in that** the pressure adjustment unit (24) comprises at least one pressure build-up means (28), in particular a pressure regulator, which can be brought into fluid connection with at least one of the at least one fluid channel (18) and by means of which an overpressure can be generated at the channel opening (20) of the fluid channel (18) on the flange section (10).

3. Filling device (2) according to claim 1 or 2, **characterised in that** the pressure adjustment unit (24) comprises at least one fluid supply means (30), through which a fluid, in particular an inert gas, such as argon or nitrogen, is injected into the channel opening (20) of the fluid channel (18) on the flange section (10).

4. Filling device (2) according to one of the preceding claims, **characterised in that** the negative pressure generated by the pressure reduction means (26) can be set at less than 1 bar, in particular less than 500 mbar, in particular less than 200 mbar, in particular less than 20 mbar, and/or that the overpressure generated by the pressure build-up means (28) is set at greater than 1 bar, in particular greater than 3 bar, in particular greater than 5 bar, in particular at a maximum of 6 bar.

5. Filling device (2) according to one of the preceding claims, **characterised in that** the pressure build-up means (28), the fluid supply means (30) and the pressure reduction means (26) can be brought into fluid connection with the same fluid channel (18) or that the pressure build-up means (28) can be brought into fluid connection with a pressure build-up fluid channel (34), the fluid supply means (30) can be brought into fluid connection with a fluid supply channel and the pressure reduction means (26) can be brought into fluid connection with a pressure reduction fluid channel (32).

6. Filling device (2) according to claim 5, **characterised in that** the pressure build-up fluid channel (34), the fluid supply channel and the pressure reduction fluid channel (32) can be separated from one another and spaced from one another at least on the side opposite the channel opening (20) on the flange section (10) and/or the pressure build-up fluid channel (34), fluid supply channel and pressure reduction fluid channel (32) open together into the channel opening (20) on the flange section (10).

7. Filling device (2) according to one of the preceding claims, **characterised in that** the pressure adjustment unit (24) comprises at least one pressure build-up valve (40), arranged between a pressure build-up means (28) and the distributor unit (6) on the fluid channel (18), in particular fixed on the distributor unit (6), that the pressure adjustment unit (24) comprises at least one fluid supply valve, arranged between the fluid supply means (30) and the distributor unit (6) on the fluid channel (18), in particular is fixed to the distributor unit (6), and/or that the pressure adjustment unit (24) comprises at least one pressure reduction valve (42), arranged between the pressure reduction means (26) and the distributor unit (6) on the fluid channel (18), in particular fixed on the distributor unit (6).

8. Filling device (2) according to one of the preceding claims, **characterised in that** the distributor unit (6) comprises a distributor body (44) that forms a common, one-piece component with the flange section (10) or that the distributor unit (6) comprises a distributor body (44) that comprises a flange receptacle (50) and a flange body (48) that forms the flange section (10), wherein the flange body (48) can be fixed or is fixed to the flange receptacle (50) of the distributor body (44).

9. Filling device (2) according to one of the preceding claims, **characterised in that** the at least one fluid channel (18) and the cut-out (16) comprise a common section, at least in some sections.

10. Filling device (2) according to one of the preceding claims, **characterised in that** the at least one fluid channel (18) comprises a bore extending transversely or obliquely to the cut-out (16) of the distributor unit (6).

11. Filling device (2) according to one of the preceding claims, **characterised in that** the filling unit (22) comprises a dosing valve (36) that is arranged in the receptacle (8) of the distributor unit (6) and/or that the filling unit (22) comprises a dosing needle (38) that is arranged on the dosing valve (36), which extends from the dosing valve (36) to the opening (12) on the contact surface (14) of the battery cell (4) and through which electrolyte can be supplied to the battery cell (4).

12. Filling device (2) according to one of the preceding claims, **characterised in that** the filling unit (22) comprises at least one funnel-shaped filling body (54), in which electrolyte can be arranged and through which electrolyte can be transported through the dosing valve (36) and/or through the dosing needle (38) in the direction of the battery cell (4).

13. Filling device (2) according to one of the preceding claims, **characterised by** at least one flange sealing means (46) that is arranged on a side of the flange section (10) facing the contact surface (14) of the battery cell (4), in particular of the flange body (48); on the flange section (10), in particular on the flange body (48), by at least one distributor unit sealing means (52) that is arranged on the side of the distributor body (44) facing the flange body (48) between the distributor body (44) and the flange body (48) and/or by at least one dosing valve sealing means that is arranged on the side to the distributor unit (6) facing the dosing valve (36) between the distributor unit (6) and the dosing valve (36).

14. Method for operating a filling device (2), according to one of claims 1 to 13, comprising the steps:
a. Arrangement of the filling device (2) on a battery cell (4), wherein the cut-out (16) on the filling device (2) overlaps at least in the area of the flange section (10), at least in sections, with the opening (12) of a contact surface (14) of the battery cell (4);
b. Generation of negative pressure on the channel opening (20) of the fluid channel (18) on the flange section (10) by the pressure reduction means (26) of the pressure adjustment unit (24) until a certain filling pressure is achieved;
c. Filling of the battery cell (4) with electrolyte by the filling unit (22);
d. Generation of overpressure on the channel opening (20) of the fluid channel (18) on the flange section (10) by the pressure build-up means (28) of the pressure adjustment unit (24) until a certain wetting pressure is achieved by adding an inert gas;

15. Method according to claim 14, **characterised in that** the generation of a negative pressure at the channel opening (20) of the fluid channel (18) on the flange section (10) by the pressure reduction means (26) of the pressure adjustment unit (24) until a specific filling pressure is achieved, initially a reduction of the pressure to 5 to 20 mbar and, before the battery cell (4) is filled with electrolyte by the filling unit (22), an increase to a maximum of 500 mbar, in particular a maximum of 350 mbar, in particular a maximum of 200 mbar takes place, and/or that the determined wetting pressure comprises a maximum of 6 bar, in particular a maximum of 5 bar, in particular a maximum of 4 bar.

## Revendications

1. Dispositif de remplissage (2) pour remplir une cellule de batterie (4) avec un électrolyte, présentant au moins une unité de distribution (6) qui comporte au moins un logement (8), au moins une section de bride (10) avec laquelle l'unité de distribution (6) peut être disposée de manière plane sur une surface de contact (14) d'une cellule de batterie (4) comprenant une ouverture (12), au moins une encoche continue (16) s'étendant depuis le logement (8) jusqu'à la section de bride (10), dans lequel l'encoche (16) au moins dans la région de la section de bride (10) chevauche au moins partiellement l'ouverture (12) de la surface de contact (14) de la cellule de batterie (4), et qui comprend au moins un canal de fluide (18) qui s'ouvre avec une ouverture de canal (20) sur la section de bride (10) chevauchant au moins partiellement l'ouverture (12) de la surface de contact (14) de la cellule de batterie (4), avec au moins une unité de remplissage (22) qui est agencée dans ou sur le logement (8) de l'unité de distribution (6) pouvant être fixée ou étant fixée et à travers laquelle l'électrolyte peut être fourni à la cellule de batterie (4) directement ou indirectement via l'encoche (16) de l'unité de distribution (6), et avec au moins une unité de réglage de la pression (24) à laquelle au moins un desdits au moins un canal de fluide (18) est affecté fonctionnellement et qui comprend au moins un moyen de réduction de pression (26), en particulier une pompe à vide, qui peut être amené dans ou est en liaison fluidique avec au moins un desdits au moins un canal de fluide (18), au moyen duquel une sous-pression peut être générée au niveau de l'ouverture de canal (20) du canal de fluide (18) sur la section de bride (10).

2. Dispositif de remplissage (2) selon la revendication 1, **caractérisé en ce que** l'unité de réglage de pression (24) comprend au moins un accumulateur de pression (28), en particulier un régulateur de pression, qui peut être amené en liaison fluidique avec au moins l'un desdits au moins un canal de fluide (18), de sorte qu'une surpression peut être générée au niveau de l'ouverture de canal (20) du canal de fluide (18) au niveau de la section de bride (10).

3. Dispositif de remplissage (2) selon la revendication 1 ou 2, **caractérisé en ce que** l'unité de réglage de pression (24) comprend au moins une arrivée de fluide (30), par laquelle un fluide, en particulier un gaz inerte tel que l'argon ou l'azote, ou un produit de nettoyage peut être fourni à l'ouverture de canal (20) du canal de fluide (18) sur la section de bride (10).

4. Dispositif de remplissage (2) selon l'une des revendications précédentes, **caractérisé en ce que** la sous-pression générée par le réducteur de pression (26) est réglable à moins de 1 bar, notamment moins de 500 mbar, notamment moins de 200 mbar, notamment moins de 20 mbar, et/ou la surpression générée par l'accumulateur de pression (28) est réglable à plus de 1 bar, notamment plus de 3 bar, notamment plus de 5 bar, notamment jusqu'à un maximum de 6 bar.

5. Dispositif de remplissage (2) selon l'une des revendications précédentes, **caractérisé en ce que** l'accumulateur de pression (28), l'arrivée de fluide (30) et le réducteur de pression (26) sont fournis par le même canal de fluide (18) en liaison fluidique ou que l'accumulateur de pression (28) avec un canal de fluide d'accumulation de pression (34), l'arrivée de fluide (30) avec un canal d'arrivée de fluide (34) et le réducteur de pression (26) avec le canal de fluide de réduction de pression (32) soient fournis en liaison fluidique.

6. Dispositif de remplissage (2) selon la revendication 5, **caractérisé en ce que** le canal de fluide d'accumulation de pression (34), le canal d'arrivée de fluide et le canal de fluide de réduction de pression (32) sont séparés et éloignés les uns des autres chacun d'un côté à l'ouverture du canal (20) au niveau de la section de bride (10) et/ou que le canal de fluide d'accumulation de pression (34) le canal d'arrivée de fluide et le canal de fluide de réduction de pression (32) débouchent ensemble dans l'ouverture de canal (20) au niveau de la section de bride (10).

7. Dispositif de remplissage (2) selon l'une des revendications précédentes, **caractérisé en ce que** l'unité de réglage de pression (24) comprend au moins une valve d'accumulation de pression (40), qui est disposée entre l'accumulateur de pression (28) et l'unité de distribution (6) au niveau du canal de fluide (18), qui est fixé notamment à l'unité de distribution (6), que l'unité de réglage de pression (24) comprend au moins une valve d'arrivée de fluide, qui est disposée entre l'arrivée de fluide (30) et l'unité de distribution (6) sur le canal de fluide (18), qui est fixé notamment à l'unité de distribution (6), et/ou que l'unité de réglage de pression (24) comprend au moins une valve de réduction de pression (42), qui est disposée entre le réducteur de pression (26) et l'unité de distribution (6) au niveau du canal de fluide (18), qui est fixé notamment à l'unité de distribution (6).

8. Dispositif de remplissage (2) selon l'une des revendications précédentes, **caractérisé en ce que** l'unité de distribution (6) comprend un corps de distribution (44),qui constitue avec la section de bride (10) un élément commun d'une seule pièce ou que l'unité de distribution (6) comprend un corps de distribution (44) comprenant un logement de bride (50) et un corps de bride (48) constitué d'une section de bride (10), dans lequel le corps de bride (48) peut être fixé ou est fixé au niveau du logement de bride (50) du corps de distribution (44).

9. Dispositif de remplissage (2) selon l'une des revendications précédentes, **caractérisé en ce qu'**au moins l'un des canaux de fluide (18) et l'encoche (16) comprennent au moins partiellement une section commune.

10. Dispositif de remplissage (2) selon l'une des revendications précédentes, **caractérisé en ce que** ledit au moins un canal de fluide (18) comprend un orifice s'étendant transversalement ou obliquement par rapport à l'encoche (16) de l'unité de distribution (6).

11. Dispositif de remplissage (2) selon l'une des revendications précédentes, **caractérisé en ce que** l'unité de remplissage (22) comprend une valve de dosage (36), qui est disposée dans le logement (8) de l'unité de distribution (6) et/ou que l'unité de remplissage (22) comprend une aiguille de dosage (38), qui est disposé au niveau de la valve de dosage (36), qui s'étend de la valve de dosage (36) jusqu'à l'ouverture (12) de la surface de contact (14) de la cellule de batterie (4) et à travers laquelle l'électrolyte est fourni à la cellule de batterie (4).

12. Dispositif de remplissage (2) selon l'une des revendications précédentes, **caractérisé en ce que** l'unité de remplissage (22) comprend au moins un corps de remplissage (54) en forme d'entonnoir, dans lequel l'électrolyte est disposé et à travers lequel l'électrolyte est transportable à travers la valve de dosage (36) et/ou l'aiguille de dosage (38) vers la cellule de batterie (4).

13. Dispositif de remplissage (2) selon l'une des revendications précédentes, **caractérisé en ce que** au moins un scellant pour bride (46) qui est disposé sur un côté de la section de bride (10), notamment du corps de bride (48), tourné vers la surface de contact (14) de la cellule de batterie (4) sur la section de bride (10), en particulier sur le corps de bride (48), par au moins un scellant pour unité de distribution (52), qui est disposé sur un côté du corps de distribution (44) tourné vers le corps de bride (48) entre le corps de distribution (44) et le corps de bride (48) et/ou par au moins un scellant pour valve de dosage, qui est disposé sur un côté de l'unité de distribution (6) tourné vers la valve de dosage (36) entre l'unité de distribution (6) et la valve de dosage (36).

14. Procédé d'exploitation d'un dispositif de remplissage (2) selon l'une des revendications 1 à 13, comprenant les étapes suivantes :
a. agencer le dispositif de remplissage (2) sur une cellule de batterie (4), sur laquelle l'encoche (16) du dispositif de remplissage (2) chevauche au moins dans la région de la section de bride (10), au moins partiellement une ouverture (12) d'une surface de contact (14) d'une unité de batterie (4);
b. générer une sous-pression sur l'ouverture de canal (20) du canal de fluide (18) sur la section de bride (10) à travers le réducteur de pression (26) de l'unité de réglage de pression (24) jusqu'à atteindre un certain niveau de pression de remplissage;
c. remplir la cellule de batterie (4) avec l'électrolyte à travers l'unité de remplissage (22);
d. générer une surpression au niveau de l'ouverture de canal (20) du canal de fluide (18) sur la section de bride (10) à travers l'accumulateur de pression (28) de l'unité de réglage de pression (24) jusqu'à atteindre une certaine pression d'humidité.

15. Procédé selon la revendication 14, **caractérisé en ce que** la génération d'une sous-pression sur l'ouverture de canal (20) du canal de fluide (18) sur la section de bride (10) par le réducteur de pression (26) de l'unité de réglage de pression (24) jusqu'à atteindre une certaine pression de remplissage implique dans un premier temps un abaissement de la pression de 5 à 20 mbar et avant le remplissage de la cellule de batterie (4) avec l'électrolyte par l'unité de remplissage (22) une augmentation jusqu'à 500 mbar au maximum, notamment 350 mbar au maximum, notamment 200 mbar au maximum et/ou **en ce que** la pression d'humidité définie comprend 6 bar au maximum, notamment 5 bar au maximum, notamment 4 bar au maximum.
